# EUROPÄISCHE PATENTANMELDUNG

(11) **EP 1 378 986 A1**
(43) Veröffentlichungstag der Anmeldung: **07.01.2004**
(21) Anmeldenummer: 03405045.0
(22) Anmeldetag: 30.01.2003
(51) Int. Cl.: H02K 41/03, H02K 16/04

(54) **Konstantkraftgeber**

(30) Priorität: 02.07.2002 CH 11542002
(71) Anmelder: NTI AG, 8005 Zürich (CH)
(72) Erfinder: Ausderau, Daniel, 8047 Zürich (CH)
(74) Vertreter: Heinen, Detlef

(57) **Zusammenfassung**

Ein Konstantkraftgeber umfasst ein ortsfest angeordnetes und ein relativ zu diesem ortsfest angeordnetes Teil (10) in axialer Richtung bewegbar angeordnetes Teil (11). Mindestens eines der beiden Teile (10,11) umfasst einen magnetisch leitenden Bereich oder einen permanentmagnetischen Bereich. Zumindest das andere Teil umfasst einen permanentmagnetischen Bereich, dessen Magnetisierung so ausgebildet ist, dass zumindest ein Anteil des erzeugten magnetischen Flusses (Φ) senkrecht zur axialen Bewegungsrichtung des bewegbar angeordneten Teils (11) aus dem permanentmagnetischen Bereich austritt, in den magnetisch leitenden Bereich eintritt, dort geführt wird und wieder aus dem magnetisch leitenden Bereich austritt zurück zu dem permanentmagnetischen Bereich verläuft.

## Beschreibung

Die Erfindung betrifft einen Konstantkraftgeber gemäss dem unabhängigen Patentanspruch.

Beim Bewegen von Massen in einer von der horizontalen Richtung abweichenden Richtung spielt die Gewichtskraft eine Rolle, während bei horizontaler Bewegung der Masse die Gewichtskraft unerheblich ist. Unter Vernachlässigung von Reibungseffekten muss also bei einer horizontalen Bewegung von einem Antriebssystem nur in den Beschleunigungs- und Bremsphasen einer Bewegung eine Leistung aufgebracht werden (bei einer - als reibungsfrei angenommenen - Bewegung mit konstanter Geschwindigkeit ist keine Beschleunigung erforderlich).

Anders ist die Situation bei einer Bewegung der Masse in einer von der horizontalen Richtung abweichenden Richtung, insbesondere bei einer Bewegung der Masse in vertikaler Richtung. Im letztgenannten Fall unterliegt die Masse konstant der Erdanziehung, es wirkt also stets die Erdbeschleunigung "g" und somit eine konstante Kraft auf die Masse. Ein Antriebssystem muss hier also selbst bei einer ruhenden Masse eine entsprechende Gegenkraft aufbringen. Bei elektromagnetischen Antrieben - z.B. bei Linearantrieben-heisst das, dass der Linearmotor kontinuierlich bestromt werden muss, um eine angekoppelte Masse in einer Position ruhend zu halten. Durch die kontinuierliche Bestromung des Linearmotors entstehen im Motor Verluste (z.B. Wärme), die eine zusätzlichen Belastung des Motors (zusätzlich zu der Belastung, die bei einer Bewegung der Masse entsteht) darstellen. In der Konsequenz heisst das, dass das Antriebssystem - hier der Linearmotor - so ausgelegt werden muss, dass zusätzlich zu der für die Bewegung der Masse erforderlichen Leistung auch noch eine zusätzliche konstante Leistung zur Kompensation der Gewichtskraft aufgebracht werden kann. Bei derartigen Anwendungen wird daher eine im Verhältnis zur erforderlichen Leistung für die dynamische Bewegung unverhältnismässig grosse Leistung benötigt nur um die Gewichtskraft zu kompensieren. Diesem Nachteil ist man durch verschiedene Ansätze entgegengetreten, von denen hier nur einige wenige erläutert werden sollen.

Ein Ansatz basiert auf dem Prinzip von Aufzügen. Es wird also ein Gegengewicht vorgesehen, dessen Masse bei einem vollständig ausbalancierten System genau gleich gross ist wie die zu beschleunigende "Lastmasse" (also die eigentlich gewünschte zu beschleunigende Masse). Somit wird also die eigentlich zu beschleunigende Masse (die "Lastmasse") verdoppelt, und der Antrieb muss auch hier grösser ausgelegt werden.

Ein weiterer Ansatz beruht auf der Verwendung von mechanischen Federn zur Kompensation der Gewichtskraft. Hier kommen insbesondere spezielle Spiralfedern in Betracht, bei denen in gewissen Bereichen der Auslenkung die Rückstellkraft näherungsweise konstant ist und somit die Gewichtskraft kompensiert werden kann. Solche Federn sind jedoch nur brauchbar für langsame Anwendungen und geringe Hübe, darüber hinaus ist auch ihre Lebensdauer nicht sehr hoch.

Ein weiterer Ansatz beruht auf der pneumatischen Kompensation der Gewichtskraft mittels eines in einem Zylinder verschiebbaren Kolbens, der mit einem konstanten Druck beaufschlagt wird. Dazu muss einerseits Druckluft bereit gestellt und entsprechende Zuleitungen vorgesehen werden, und ausserdem muss eine gute Abdichtung zwischen Kolben und Zylinder vorgesehen sein, was eine grosse Reibung zur Folge hat und auch die Dichtung mit der Zeit verschleisst.

Hier setzt die vorliegende Erfindung an, deren Aufgabe es ist, die Gewichtskraft einer zu bewegenden Masse über einen vorgegebenen maximalen Hub zu kompensieren, also eine entsprechende Gegenkraft zu erzeugen, jedoch ohne die vorstehend beschriebenen Nachteile.

Diese Aufgabe wird durch einen Konstantkraftgeber gelöst, wie er durch die Merkmale des unabhängigen Patentanspruchs charakterisiert ist. Besonders vorteilhafte Ausführungen des erfindungsgemässen Konstantkraftgebers ergeben sich aus den Merkmalen der abhängigen Patentansprüche. Besonders vorteilhaft ist der Einsatz eines erfindungsgemässen Konstantkraftgebers im Zusammenhang mit einem Linearantriebssystem.

Insbesondere umfasst der Konstantkraftgeber ein ortsfest angeordnetes und ein relativ zu diesem ortsfest angeordneten Teil in axialer Richtung bewegbar angeordnetes Teil. Mindestens eines der beiden Teile umfasst einen magnetisch leitenden (insbesondere ferromagnetischen) oder permanentmagnetischen Bereich und zumindest das andere Teil umfasst einen permanentmagnetischen Bereich. Die Magnetisierung des permanentmagnetischen Bereich ist so ausgebildet, dass zumindest ein Anteil des erzeugten magnetischen Flusses senkrecht zur axialen Bewegungsrichtung des bewegbar angeordneten Teils aus dem permanentmagnetischen Bereich austritt, in den magnetisch leitenden Bereich eintritt, dort geführt wird und wieder aus dem magnetisch leitenden Bereich austritt zurück zu dem permanentmagnetischen Bereich verläuft.

Die dadurch auf das bewegbare Teil wirkende Kraft dient zur Kompensation der Gewichtskraft, die hier nur durch den Magnetismus erzeugt wird, wodurch aufwendige Massnahmen und auch die eingangs genannten Nachteile vermieden werden können. Auch der konstruktive Aufwand des erfindungsgemässen Konstantkraftgebers ist gering.

Bei einem vorteilhaften Ausführungsbeispiel des erfindungsgemässen Konstantkraftgebers weist der permanentmagnetische Bereich eine Magnetisierung auf, die senkrechte zur axialen Bewegungsrichtung ausgerichtet ist. Damit kann zumindest ein grosser Anteil des austretenden magnetischen Flusses (je nach spezieller Anordnung praktisch der gesamte magnetische Fluss) in den magnetisch leitenden (insbesondere ferromagnetischen) Bereich eintreten, was eine grosse (Kompensations-)Kraft bewirkt.

Die Magnetisierung kann zweipolig oder auch mehrpolig sein (immer ganzzahlige Vielfache von zwei - es gibt keine magnetischen Monopole).

Der permanentmagnetische Bereich kann an dem beweglichen Teil und der magnetisch leitende Bereich an dem ortsfest angeordneten Teil vorgesehen sein oder umgekehrt.

Auch kann sowohl das bewegbar angeordnete Teil als auch das ortsfest angeordnete Teil einen permanentmagnetischen Bereich aufweisen, was insofern vorteilhaft sein kann, als dadurch die (Kompensations-)Kraft erhöht werden kann.

Bei einem vorteilhaften Ausführungsbeispiel des erfindungsgemässen Konstantkraftgebers weist das ortsfest angeordnete Teil im Querschnitt ein Hohlprofil auf, in welchem das bewegliche Teil geführt ist. Die Führung ist insofern vorteilhaft, als auf diese Weise verhindert werden kann, dass durch die magnetische Anziehung das bewegbare Teil vollständig gegen das ortsfest angeordnete Teil gezogen wird und damit möglicherweise nicht mehr oder nur noch sehr schwer bewegbar ist.

Bei einer Weiterbildung dieses Ausführungsbeispiel des Konstantkraftgebers ist das Hohlprofil geschlossen, wodurch eine symmetrische Anordnung erreicht werden kann, während bei einer anderen Weiterbildung das Hohlprofil zumindest zu einer Seite hin offen ist, was insofern von Vorteil sein kann, als man bei einer solchen asymmetrischen Anordnung seitlich an das bewegbare Teil (und zwar auch im Bereich seitlich des Hohlprofils) Lasten ankoppeln kann und nicht nur im Bereich des bewegbaren Teils, der in jedem Falle (auch bei maximalem Hub) ausserhalb des Hohlprofils liegt.

Wie bereits gesagt, liegt eine vorteilhafte Anwendung des erfindungsgemässen Konstantkraftgebers in einem Linearantriebssystem mit einer Antriebseinheit, welche einen Stator und einen relativ zu diesem Stator bewegbaren Läufer umfasst, und ferner einen wie vorstehend beschriebenen erfindungsgemässen Konstantkraftgeber. Die Gewichtskraft einer am Läufer angekoppelten Last kann dann bei nichthorizontalen Anwendungen, insbesondere bei Vertikalanwendungen, von dem Konstantkraftgeber kompensiert werden, sodass ein Linearmotor verwendet werden kann, der mehr oder weniger für die dynamische Bewegung der Last ausgelegt ist.

Vorteilhaft ist dabei insbesondere ein Linearantriebssystem, bei welchem das bewegbare Teil des Konstantkraftgebers mit dem Läufer des Linearantriebs verbunden ist, beispielsweise eine Verlängerung des Läufers des Linearantriebs darstellt.

Wenn die Verbindung lösbar ausgebildet ist, kann sogar das Antriebssystem je nach zu bewegender "Lastmasse" mit einem entsprechend ausgelegten Konstantkraftgeber verbunden werden.

Bei einer Weiterbildung des Linearantriebssystems sind zwei Konstantkraftgeber vorgesehen, dessen ortsfest angeordnete Teile miteinander verbunden sind und die zusammen ein gemeinsames ortsfestes Teil bilden, in welchem die bewegbaren Teile der Konstantkraftgeber geführt sind. Die beiden bewegbaren Teile sind durch ein Verbindungsstück, z.B. eine Platte, miteinander verbunden. Mit diesem Verbindungsstück ist auch der Läufer der Antriebseinheit verbunden. Durch diese konstruktive Ausgestaltung wird verhindert, dass sich der Läufer des Linearmotors aufgrund von an der Lastmasse angreifenden Querkräften oder Momenten verdrehen kann.

Weitere vorteilhafte Ausgestaltungen ergeben sich aus der nachfolgenden Beschreibung von Ausführungsbeispielen der Erfindung mit Hilfe der Zeichnung. Es zeigen:
- Fig. 1-4: die prinzipielle Wirkungsweise des erfindungsgemässen Konstantkraftgebers anhand eines diametral magnetisierten Elements und eines Eisenkerns in verschiedenen Relativpositionen,
- Fig. 5: ein Ausführungsbeispiel eines Konstantkraftgebers mit einem kreiszylindrischen, magnetisch leitenden ortsfesten Teil und einem relativ dazu bewegbaren diametral magnetisierten Teil im Längsschnitt,
- Fig. 5a-5d: das Ausführungsbeispiel des Konstantkraftgebers aus Fig. 5 mit verschiedenen Relativpositionen von bewegbarem Teil und ortsfestem Teil,
- Fig. 6: das Ausführungsbeispiel des Konstantkraftgebers aus Fig. 5 im Querschnitt,
- Fig. 7: ein Ausführungsbeispiel des Konstantkraftgebers mit einem kreiszylindrischen ortsfesten Teil mit Permanentmagnetisierung und einem relativ dazu bewegbaren magnetisch leitenden Teil,
- Fig. 8: ein Ausführungsbeispiel des Konstantkraftgebers mit einem kreiszylindrischen, ortsfesten Teil mit Permanentmagnetisierung und einem relativ dazu bewegbaren Teil mit diametraler Magnetisierung,
- Fig. 9-11: Ausführungsbeispiele des Konstantkraftgebers mit rechteckigem Querschnitt, die ansonsten den Ausführungsbeispielen gemäss Fig. 6-8 entsprechen,
- Fig. 12-14: Ausführungsbeispiele des Konstantkraftgebers gemäss Fig. 6-8, jedoch mit mehrpoliger Magnetisierung,
- Fig. 15-17: Ausführungsbeispiele des Konstantkraftgebers mit rechteckigem Querschnitt entsprechend den Ausführungsbeispielen gemäss Fig. 9-11, jedoch nach einer Seite hin offen,
- Fig. 18: ein Anwendungsbeispiel des Konstantkraftgebers in Kombination mit einem Linearantrieb (schematisch),
- Fig. 19: ein weiteres Anwendungsbeispiel des Konstantkraftgebers in Kombination mit einem Linearantrieb mit Sicherung des Läufers gegen Verdrehen (H-Form),
- Fig. 20-22: weitere Ausführungsbeispiele des Konstantkraftgebers, bei denen das bewegliche Teil des Konstantkraftgebers mit dem Läufer eines Linearantriebs verbunden sind.

Einleitend soll festgehalten werden, dass die nachfolgende Beschreibung der Ausführungsbeispiele mit Hilfe der einzelnen Figuren grundsätzlich mit Hilfe von horizontalen Anordnungen erfolgt, weil die Figuren auf diese Weise platzsparender angeordnet werden können. Die tatsächliche Anwendung ist aber gerade für nicht-horizontale Anordnungen konzipiert, weil ja bei diesen Anwendungen die Gewichtskraft einer Lastmasse zu kompensieren ist, und es ist ja grundsätzlich so, dass genau diese Gewichtskraftkompensation (oder wenigstens sehr wesentliche Anteile davon) von dem Konstantkraftgeber übernommen werden soll.

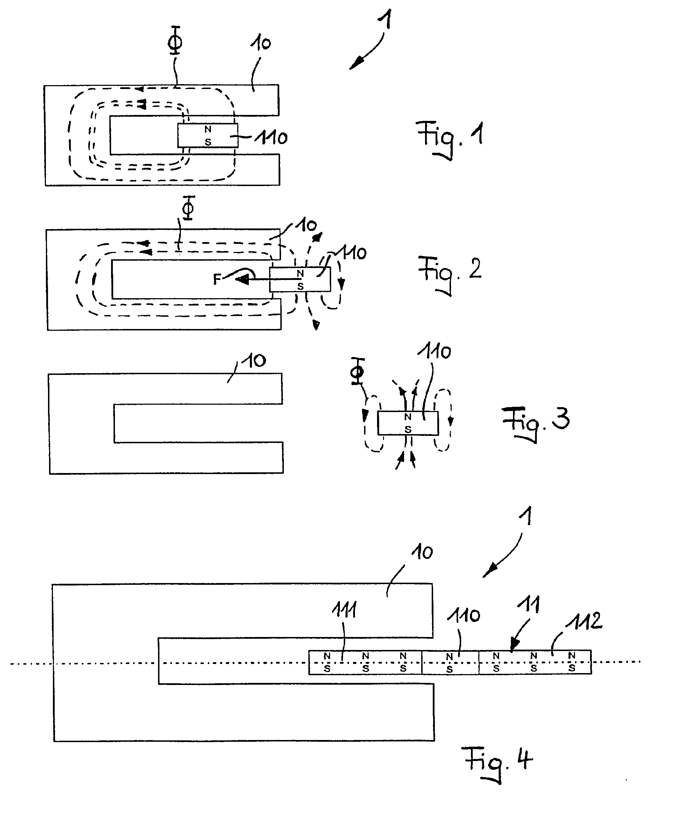

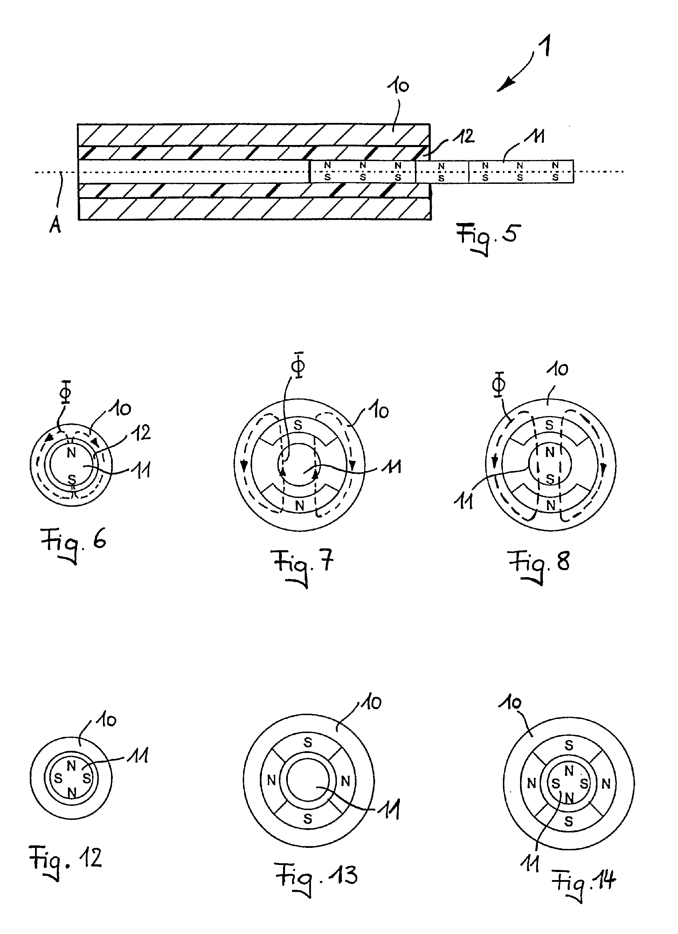

Anhand der Fig. 1-4 soll zunächst die prinzipielle Wirkungsweise des erfindungsgemässen Konstantkraftgebers 1 erläutert werden. Dazu ist ein U-förmiger Eisenkern (Eisen ist ein ferromagnetisches und damit magnetisch sehr gut leitendes Material) als ortsfestes Teil 10 und ein diametral (permanent-)magnetisiertes Element 110 eines bewegbaren Teils 11 (siehe Fig. 4) dargestellt, was für die Erläuterung des Funktionsprinzips ausreichend ist. In den Fig. 1-3 befindet sich dabei das diametral magnetisierte Element 110 in drei verschiedenen charakteristischen Stellungen, die im folgenden näher betrachtet werden.

In Fig. 1 ist das magnetisierte Element 110 vollständig im Bereich des Eisenkerns 10 angeordnet. Der aus dem magnetisierten Element 110 des bewegbaren Teils 11 austretende magnetische Fluss Φ tritt in den Eisenkern 10 ein, wird in diesem geführt bis hin zum magnetisierten Element 110 zurück, wodurch der magnetische Kreis geschlossen ist. Der Einfachheit halber wird hier davon ausgegangen, dass die Anziehungskräfte zwischen dem magnetisierten Element 110 und den beiden Schenkeln des Eisenkerns 10 hier genau gleich gross sind. Praktisch der gesamte aus dem magnetisierten Element 110 austretende magnetische Fluss tritt in den Eisenkern 10 ein und wird in diesem zu dem magnetisierten Element 110 zurückgeführt. Auf das magnetisierte Element 110 wirkt keine Kraft in Längsrichtung (in Fig. 1 also nach links oder nach rechts).

In Fig. 2 ist das magnetisierte Element 110 so angeordnet, dass der aus dem Element 110 austretende magnetische Fluss gerade beginnt, in den Eisenkern 10 einzutreten (am linken Ende in Fig. 2). Auf das magnetisierte Element 110 wirkt eine Kraft F, die in die in Fig. 2 dargestellte Richtung zeigt, das magnetisierte Element 110 wird quasi "in den Eisenkern hinein" gezogen. Ist das magnetisierte Element 110 vollständig in den Eisenkern 10 eingetaucht, wird der aus dem Element 110 austretende magnetische Fluss vollständig im Eisenkern 10 geführt, und die Situation entspricht wieder der Situation wie sie anhand von Fig. 1 erläutert wurde. Damit das magnetisierte Element 110 in Ruhe bleibt und nicht weiter in den Eisenkern 10 hinein gezogen wird, könnte nun am anderen Ende des Elements 110 (am rechten Ende in Fig. 2) eine auf eine Masse wirkende Gewichtskraft gleicher Grösse angreifen, wozu man sich die Darstellung in Fig. 2 beispielsweise um 90° gedreht vorstellen muss, da es sich in Fig. 2 um eine horizontale Anordnung handelt.

In Fig. 3 schliesslich ist das magnetisierte Element 110 so angeordnet, dass der aus dem Element 110 austretende magnetische Fluss überhaupt nicht in den Eisenkern 10 eintreten kann. In diesem Falle wirkt ebenfalls keine Kraft auf das Element 110.

Bei der in Fig. 2 gezeigten Situation ist die auf das magnetisierte Element 110 wirkende Kraft F allerdings nicht immer gleich gross, wie das zur Kompensation einer Gewichtskraft erwünscht ist. Das liegt allerdings daran, dass in Fig. 2 (und auch in Fig. 1 und Fig. 3) nur ein kleiner Ausschnitt eines bewegbaren Teils 11 eines erfindungsgemässen Konstantkraftgebers 1 dargestellt ist, um die verschiedenen Situationen und damit die Funktionsweise besser erläutern zu können.

Betrachtet man in Fig. 4 einen längeren permanentmagnetischen Bereich des bewegbaren Teils 11, so wird unmittelbar ersichtlich, dass das bereits in den Eisenkern 10 eingetauchte Stück 111 des permanentmagnetischen Bereichs des bewegbaren Teils 11 keine Kräfte in Längsrichtung (also nach links oder rechts in Fig. 4) hervorruft, sondern der Situation in Fig. 1 entspricht. Daran anschliessend erkennt man dasjenige Element 110 des permanentmagnetischen Bereichs, welches eine Kraft F zur Folge hat, entsprechend der Situation in Fig. 2. Es schliesst sich ein Stück 112 an, welches ebenfalls keine Kräfte in Längsrichtung hervorruft, sondern der Situation in Fig. 3 entspricht.

Wie bereits erwähnt, ist die Kraft auf das einzelne magnetisierte Element 110 während des Eintretens in den Eisenkern 10 (siehe Situation in Fig. 2) nicht konstant (wegen der nur kurzen Längsausdehnung des Elements 110). Bei einem gesamten permanentmagnetischen Bereich eines bewegbaren Teils 11, wie er in Fig. 4 dargestellt ist, ist es hingegen so, dass der gesamte permanentmagnetische Bereich (und damit über eine entsprechende Länge) die gleiche Magnetisierung aufweist. Stellt man sich nun den permanentmagnetischen Bereich des bewegbaren Teils 11 in viele einzelne identisch magnetisierte Elemente 110 unterteilt vor, so ist es immer genau die gleiche Menge an magnetischem Fluss Φ, welche die Kraft F hervorruft, denn derjenige Anteil des magnetischen Flusses, der beim weiteren Eintreten des permanentmagnetischen Bereichs des bewegbaren Teils 11 für die Bildung der Kraft F verloren geht - in Fig. 4 also derjenige Anteil, der beim weiteren Eintreten des bewegbaren Teils in Richtung nach links vollständig zwischen die Schenkel des Eisenkerns 10 gelangt und damit nicht mehr zur Bildung der Kraft F beiträgt - wird von hinten her (in Fig. 4 also von rechts her) wieder nachgeschoben, sodass die zur Bildung der Kraft F beitragende Menge an magnetischem Fluss Φ und damit die Kraft F konstant bleibt. Dies gilt natürlich nicht nur bei einer Bewegung des permanentmagnetischen Bereichs des bewegbaren Teils 11 in Richtung "in den Eisenkern 10 hinein" (in Fig. 4 also nach links), sondern auch bei einer Bewegung des permanentmagnetischen Bereichs des Teils 11 in Richtung "aus dem Eisenkern" 10 heraus (in Fig. 4 also nach rechts).

In Fig. 5 ist nun ein Ausführungsbeispiel eines Konstantkraftgebers 1 mit einem kreiszylindrischen, magnetisch leitenden ortsfesten Teil 10 (entsprechend dem Eisenkern) und einem relativ dazu bewegbaren diametral magnetisierten Teil im Längsschnitt dargestellt. Unter magnetisch leitend soll dabei die Eigenschaft verstanden werden, den eintretenden magnetischen Fluss mehr oder weniger vollständig in dem Material zu führen. Das ortsfeste Teil 10 ist hohlzylindrisch ausgebildet. Ferner ist der permanentmagnetische Bereich des bewegbaren Teils 11 zu erkennen, der ebenfalls kreiszylindrisch ausgebildet ist. Da es praktisch nur schwer möglich ist, den bewegbaren Teil 11 so auszubilden, dass er immer genau ausbalanciert entlang der Längsachse A bewegt wird, ist das bewegbare Teil 11 bzw. dessen permanentmagnetischer Bereich in dem ortsfesten Teil 10 geführt. Bei der kleinsten Abweichung vom (instabil) ausbalancierten Zustand würde sonst das bewegbare Teil 11 bzw. dessen permanentmagnetischer Bereich gegen die Innenwand des ortsfesten Teils gezogen. Die Führung des bewegbaren Teils 11 bzw. von dessen permanentmagnetischen Bereich ist hier derart realisiert, dass eine (in Fig. 5 übertrieben "dick" dargestellte) Gleiteinlage 12 (z.B. aus Polyethylen) vorgesehen ist, welche das bewegbare Teil 11 bzw. dessen permanentmagnetischen Bereich führt, wobei ein geringes Spiel zwischen bewegbarem Teil 11 und der Gleiteinlage 12 besteht. Auch hier wird das bewegbare Teil 11 natürlich aus der (instabil) ausbalancierten Lage gegen die Gleiteinlage gezogen werden, was jedoch aufgrund der geringen Reibung zwischen bewegbarem Teil 11 und Gleiteinlage 12 in Kauf genommen werden kann. Eine Ansicht des Ausführungsbeispiels, welches in Fig. 5 im Längsschnitt dargestellt ist, ist in Fig. 6 zu erkennen, aus welcher man die kreiszylindrische Form gut erkennen kann.

Stellt man sich in Fig. 5 vor, dass gleichnamige Magnetpole am bewegbaren Teil 11 und am ortsfesten Teil 10 gegenüber zu liegen kommen, würde das bewegbare Teil natürlich nicht in das ortsfeste Teil hineingezogen, sondern herausgestossen. Führt man das bewegbare Teil 11 also um einen bestimmten Weg in das ortsfeste Teil hinein, so kann auf diese Weise eine entgegen der herausstossend wirkenden Kraft wirkende Gewichtskraft ebenfalls kompensiert werden. Dies ist auch bei rechteckigen Querschnitten der Fall, wobei bei runden Querschnitten ggf. das bewegbare Teil drehfest geführt werden müsste, damit es nicht versucht, sich durch Drehen derart auszurichten, dass ungleichnamige Pole gegenüber zu liegen kommen. Bei rechteckigen Querschnitten reicht dazu die normale Gleitführung aus, weil dort durch die rechteckige Form ein Verdrehen verhindert wird.

In Fig. 5a-5f ist das Ausführungsbeispiel des Konstantkraftgebers aus Fig. 5 noch einmal in verschiedenen Relativpositionen von bewegbarem permanentmagnetischem Teil 11 und ortsfestem hohlzylindrischen (und magnetisch leitendem) Teil 10 dargestellt, wobei in Fig. 5a-5c ein kurzes bewegbares permanentmagnetisches Teil 11 und ein relativ dazu langes ortsfestes hohlzylindrisches Teil 10 zu erkennen ist. Auf die Darstellung des Gleiteinsatzes wurde hier verzichtet. Man erkennt, dass bei vollständig in das orstfeste Teil 10 eingetauchtem bewegbaren Teil 11 (Fig. 5b) keine Kraft auf das bewegbare Teil 11 wirkt, während in den beiden anderen Relativpositionen (Fig. 5a, Fig. 5c) jeweils eine Kraft F wirkt, wie sie in den entsprechenden Figuren dargestellt ist.

Gleiches gilt bezüglich Fig. 5d-5f, in welchen jeweils ein verhältnismässig langes bewegbares Teil 11 und ein verhältnismässig kurzes ortsfestes hohlzylindrisches Teil 10 dargestellt ist. Auch hier ist gut zu erkennen, dass bei vollständig eingetauchtem bewegbaren Teil 11 keine Kraft auf das bewegbare Teil 11 wirkt (das gilt auch dann, wenn das bewegbare Teil nicht symmetrisch, aber dennoch vollständig in das hohlzylindrische Teil 10 eingetaucht ist).

Betrachtet man die Fig. 5a-5f, so kann man erkennen, dass ein solcher Konstantkraftgeber auch als Brems- bzw. Beschleunigungselement insbesondere für zyklische Bewegungen eingesetzt werden kann. Wird z.B. das bewegliche Teil 11 in Fig. 5a zunächst in Richtung in das ortsfeste Teil hinein beschleunigt (in Fig. 5a nach rechts) und durchläuft dann in Fig. 5b das ortsfeste Teil 10, so wird es beim Austreten aus dem ortsfesten Teil (Fig. 5c) gebremst, weil nämlich eine Kraft entgegen der Bewegungsrichtung wirkt.

In Fig. 7 ist ein weiteres Ausführungsbeispiel des Konstantkraftgebers dargestellt. Bei diesem Ausführungsbeispiel ist der ortsfeste Teil 10 ebenfalls kreiszylindrisch und hohlzylindrisch ausgebildet. Allerdings ist hier am ortsfesten Teil 10 die Permanentmagnetisierung vorgesehen. Das relativ zu dem ortsfesten Teil 10 bewegbare Teil 11 ist aus einem magnetisch leitenden Material hergestellt. Im Prinzip handelt es sich hierbei um das gleiche Prinzip wie in Fig. 6, lediglich die Permanentmagnetisierung wird hier an dem ortsfesten Teil 10 vorgesehen. Auf die Darstellung der Gleiteinlage wurde verzichtet. Die Permanentmagnete kann man sich in Fig. 7 mit einer diametralen Magnetisierung vorstellen, wobei beim oberen Permanentmagneten der magnetische Südpol nach innen weist (wie dargestellt) und der magnetischen Nordpol (nicht dargestellt) nach aussen (es gibt keine magnetischen Monopole). Umgekehrt ist dies beim unteren Permanentmagneten. Aus Gründen der besseren Übersichtlichkeit der Darstellung wurde dabei in Fig. 7 auf den jeweils nach aussen weisenden magnetischen Pol verzichtet.

In Fig. 8 ist ein weiteres Ausführungsbeispiel des Konstantkraftgebers dargestellt. Auch hier ist das ortsfeste Teil 10 kreiszylindrisch und hohlzylindrisch und weist eine Permanentmagnetisierung auf, ähnlich wie im Ausführungsbeispiel gemäss Fig. 7. Allerdings ist auch das bewegbare Teil 11 mit einer zur Permanentmagnetisierung des ortsfesten Teils 10 komplementären Permanentmagnetisierung versehen. Mit diesem Ausführungsbeispiel wird bei ansonsten gleicher Magnetisierung die erzeugte Kraft F vergrössert (grösserer magnetischer Fluss Φ).

Die in den Fig. 12-14 gezeigten Ausführungsbeispiele des Konstantkraftgebers entsprechen denen gemäss Fig. 6-8, jedoch mit einer mehrpoligen Magnetisierung, wodurch die Kraft F (bei ansonsten gleicher Magnetisierung) weiter erhöht werden kann.

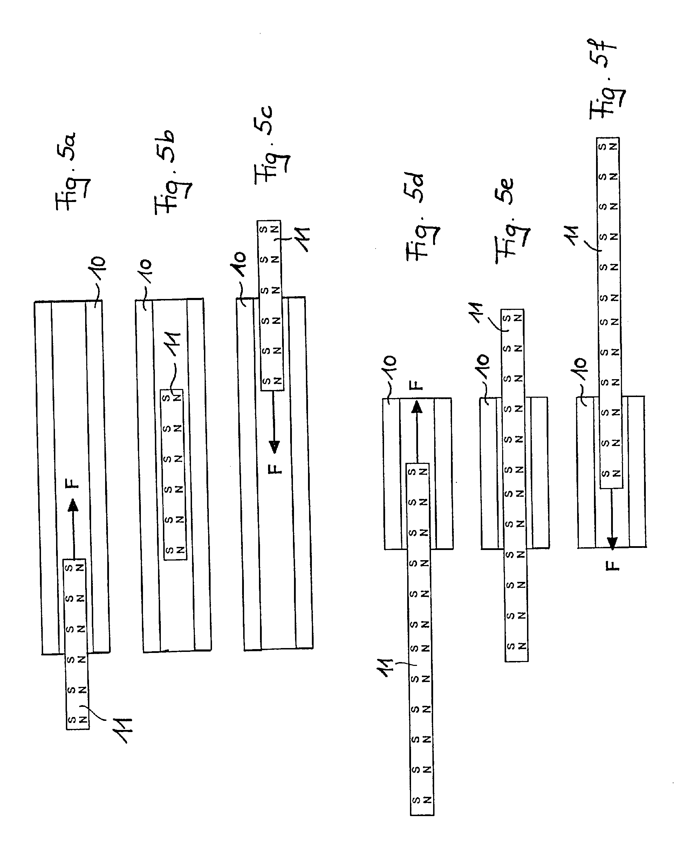

Die in den Fig. 9-11 gezeigten Ausführungsbeispiele des Konstantkraftgebers weisen rechteckige Querschnitte auf, entsprechen aber ansonsten den Ausführungsbeispielen gemäss Fig. 6-8. Auf die Darstellung der Gleiteinlage wurde aus Gründen der besseren Übersichtlichkeit verzichtet. Auch bei rechteckigen Querschnitten könnten analog zu den runden Querschnitten mehrpolige Magnetisierungen vorgesehen sein.

Im Grunde könnten auch andere Querschnittsformen (z.B. elliptisch, mehreckig, etc.) als die gezeigten für das ortsfeste Teil 10 und das bewegbare Teil 11 verwendet werden.

In Fig. 15-17 sind weitere Ausführungsbeispiele des Konstantkraftgebers gezeigt, die ebenfalls eine rechteckige Querschnittsform haben, also im wesentlichen ähnlich wie die Ausführungsbeispiele in Fig. 9-11, bei welchen aber das ortsfeste Teil 10 - im Unterschied zu den zuvor erläuterten geschlossenen Ausführungsbeispielen - nach einer Seite hin (hier nach rechts) offen ist. Dies ermöglicht, schon in diesem Bereich des bewegbaren Teils (und nicht erst in einem Bereich, der mit Sicherheit auch bei maximalem Hub nicht mehr in den ortsfesten Teil eintaucht) Lasten anzukoppeln. Auf die Darstellung der Führung für das bewegliche Teil 11 wurde erneut verzichtet.

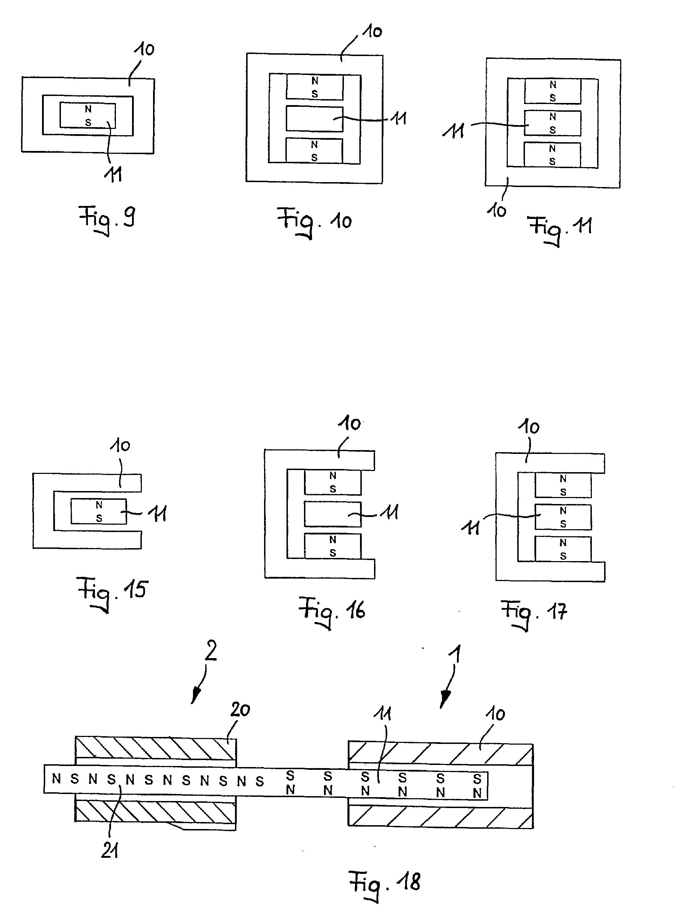

In Fig. 18 ist nun ein Anwendungsbeispiel des Konstantkraftgebers in Form eines Linearantriebssystems dargestellt, welches den Konstantkraftgeber 1 in Kombination mit einem Linearantrieb 2 umfasst und schematisch dargestellt ist. Man erkennt einerseits den Linearantrieb 2 mit Stator 20 und Läufer 21, sowie den Konstantkraftgeber 1 mit ortsfestem Teil 10 und bewegbarem Teil 11. Der Läufer 21 des Linearantriebs ist mit dem bewegbaren Teil 11 verbunden, wobei diese Verbindung fest oder lösbar sein kann. Wird ein solches Antriebssystem im Verktikalbetrieb eingesetzt, so kann die Gewichtskraft einer am Läufer 21 angekoppelten Last durch den Konstantkraftgeber 1 kompensiert werden, sodass der Linearantrieb nur noch für die Belastung durch die dynamische Bewegung der Last ausgelegt zu sein braucht. Bei einer lösbaren Verbindung des Läufers 21 mit dem bewegbaren Teil 11 des Konstantkraftgebers 1 können verschiedene Antriebe 2 mit verschiedenen Konstantkraftgebern 1 kombiniert werden, was besonders vorteilhaft ist, weil das gesamte Antriebssystem auf die jeweilige Anwendung gut abgestimmt werden kann.

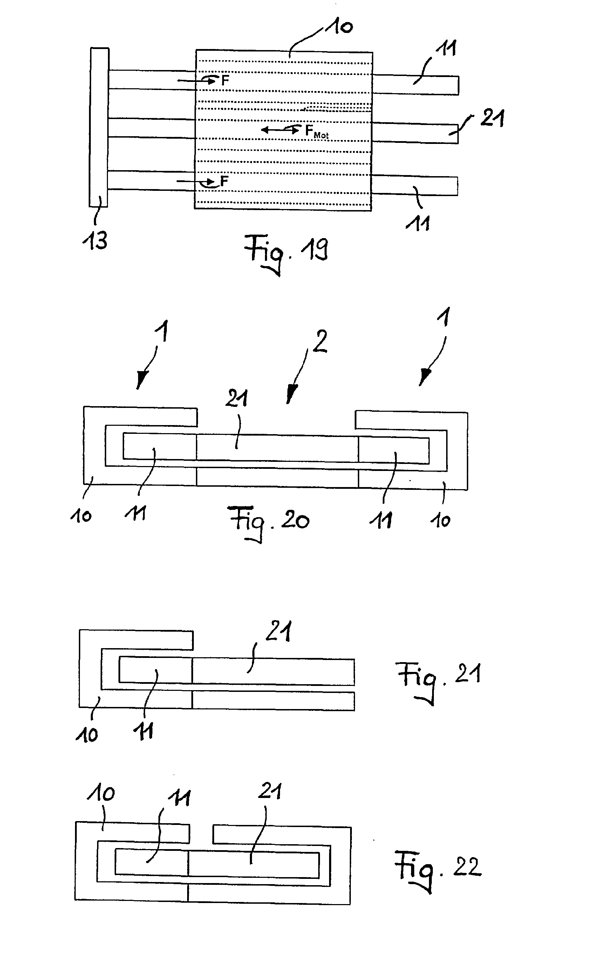

In Fig. 19 ist ein weiteres Anwendungsbeispiel des Konstantkraftgebers in Kombination mit einem Linearantrieb gezeigt, wobei hier der Läufer 21 des Linearantriebs gegen Verdrehen gesichert ist. Der Läufer 21 des Linearantriebs ist in Fig. 19 in der Mitte von zwei bewegbaren Teilen 11 des Konstantkraftgebers angeordnet. Dabei kann man sich das ortsfeste Teil 10 als ein aus zwei einzelnen ortsfesten Teilen zusammengesetztes Teil vorstellen (welches z.B. eine H-förmige äussere Gestalt aufweisen kann oder auch eine andere Gestalt). In diesem ortsfesten Teil 10 können nicht nur die beiden bewegbaren Teile 11 geführt sein, sondern auch der Läufer 21 des Linearantriebs. Die beiden bewegbaren Teile 11 sind durch ein Verbindungsstück 13 - hier in Form einer Platte - miteinander verbunden. Mit diesem Verbindungsstück 13 ist auch der Läufer 21 des Linearantriebs verbunden. Die Lastmasse kann beispielsweise an dem Verbindungsstück 13 angekoppelt werden, sie könnte aber auch am anderen Ende des Läufers 21 des Linearantriebs angekoppelt werden. Die Verdrehsicherheit und die gute Führung der (Linear-) Bewegung ist in beiden Fällen gewährleistet. Mit F ist in Fig. 19 jeweils die Kraft des Konstantkraftgebers bezeichnet, mit welcher die Gewichtskraft einer Lastmasse (bei einer von der horizontalen abweichenden Bewegungsrichtung) kompensiert werden kann, während mit F_{Mot} die von dem Linearantrieb erzeugbare Kraft für die dynamische Bewegung der Lastmasse bezeichnet ist - die Gewichtskraft der Lastmasse soll ja durch den Konstantkraftgeber kompensiert werden.

In den Fig. 20-22 sind drei weitere Ausführungsbeispiele eines Linearantriebssystems 2 gezeigt, die mit mindestens einem Konstantkraftgeber 1 gekoppelt sind. Dabei ist der Läufer 21 des Linearantriebs jeweils mit dem bewegbaren Teil 11 des Konstantkraftgebers bzw. mit den bewegbaren Teilen 11 der Konstantkraftgeber verbunden, jedoch sind die bewegbaren Teile 11 jeweils seitlich angekoppelt (der Läufer 21 bewegt sich aus der Papierebene heraus bzw. in die Papierebene hinein).

Bei dem Ausführungsbeispiel gemäss Fig. 20 ist der Läufer 21 des Linearantriebs beidseitig mit den bewegbaren Teilen 11 von zwei Konstantkraftgebern verbunden, die im Prinzip so ausgebildet sind wie diejenigen, die anhand von Fig. 15-erläutert worden sind. Dies erlaubt bei ansonsten gleicher Auslegung die Kompensation einer höheren Gewichtskraft, da quasi zwei Konstantkraftgeber vorgesehen sind. Die Anordnung hat ausserdem den Vorteil, dass sie symmetrisch ausgebildet ist.

Bei dem Ausführungsbeispiel gemäss Fig. 21 ist der Läufer 21 des Linearantriebs hingegen nur einseitig mit dem bewegbaren Teil 11 eines Konstantkraftgebers verbunden, sodass hier keine symmetrische Anordnung vorliegt. Andererseits kann hier direkt auch seitlich an den Läufer 21 des Linearantriebs bereits die Lastmasse angekoppelt werden. Das Ausführungsbeispiel gemäss Fig. 22 ist ähnlich demjenigen aus Fig. 21, allerdings ist hier der Läufer 21 des Linearantriebs nur von oben her zugänglich.

Die bisher beschriebenen bewegbaren Teile 11 können als Stangen oder Vollprofile ausgebildet sein, die eine entsprechende diametrale Permanentmagnetisierung aufweisen, sie können aber beispielsweise auch als Hohlprofile ausgebildet sein und mit entsprechend diametral magnetisierten Magneten (z.B. Scheiben oder zylindrische Stücke) befüllt sein. Im letztgenannten Fall ist natürlich darauf zu achten, dass die Hohlprofile aus einem magnetisch nicht (bzw. sehr schlecht) leitenden Material (z.B. Aluminium oder entsprechend legierte Stähle) hergestellt sind, damit nicht der Rückschluss des magnetischen Flusses bereits in dem Hohlprofil des bewegbaren Teils 11 erfolgt. Auch ist es vorstellbar, die Grösse der Kräfte auf das bewegbare Teil 11 zu variieren, indem man beispielsweise Teile des Magnetkreises (z.B. die Magnete im ortsfesten Teil 10 in Fig. 8) verschiebt bzw. verdreht. Auf diese Weise sind die Kräfte auf das bewegbare Teil in gewissem Umfang "justierbar".

## Patentansprüche

1. Konstantkraftgeber (1) mit einem ortsfest angeordneten und einem relativ zu diesem ortsfest angeordneten Teil (10) in axialer Richtung bewegbar angeordneten Teil (11), wobei mindestens eines der beiden Teile (10,11) einen magnetisch leitenden Bereich oder einen permanentmagnetischen Bereich und zumindest das andere Teil einen permanentmagnetischen Bereich umfasst, dessen Magnetisierung so ausgebildet ist, dass zumindest ein Anteil des erzeugten magnetischen Flusses (Φ) senkrecht zur axialen Bewegungsrichtung des bewegbar angeordneten Teils (11) aus dem permanentmagnetischen Bereich austritt, in den magnetisch leitenden Bereich eintritt, dort geführt wird und wieder aus dem magnetisch leitenden Bereich austritt zurück zu dem permanentmagnetischen Bereich verläuft.

2. Konstantkraftgeber nach Anspruch 1, bei welchem der permanentmagnetische Bereich eine Magnetisierung aufweist, die senkrecht zur axialen Bewegungsrichtung ausgerichtet ist.

3. Konstantkraftgeber nach Anspruch 2, bei welchem die Magnetisierung mehrpolig ist.

4. Konstantkraftgeber nach einem der vorangehenden Ansprüche, bei welchem der permanentmagnetische Bereich an dem beweglichen Teil (11) und der magnetisch leitende Bereich an dem ortsfest angeordneten Teil (10) vorgesehen ist.

5. Konstantkraftgeber nach einem der Ansprüche 1 bis 3, bei welchem der permanentmagnetische Bereich an dem ortsfesten Teil (10) und der magnetisch leitende Bereich an dem beweglichen Teil (11) vorgesehen ist.

6. Konstantkraftgeber nach einem der vorangehenden Ansprüche, bei welchem sowohl das bewegbar angeordnete Teil (11) als auch das ortsfest angeordnete Teil (10) einen permanentmagnetischen Bereich aufweist.

7. Konstantkraftgeber nach einem der vorangehenden Ansprüche, bei welchem das ortsfest angeordnete Teil (10) im Querschnitt ein Hohlprofil aufweist, in welchem das bewegliche Teil (11) geführt ist.

8. Konstantkraftgeber nach Anspruch 7, bei welchem das Hohlprofil geschlossen ist.

9. Konstantkraftgeber nach Anspruch 7 bei welchem das Hohlprofil zumindest zu einer Seite hin offen ist.

10. Linearantriebssystem mit einer Antriebseinheit (2), welche einen Stator (20) und einen relativ zu diesem Stator (20) bewegbaren Läufer (21) umfasst, und ferner mit einem Konstantkraftgeber (1) gemäss einem der vorangehenden Ansprüche.

11. Linearantriebssystem nach Anspruch 10, bei welchem das bewegbare Teil (11) des Konstantkraftgebers (1) mit dem Läufer (21) des Linearantriebs (2) verbunden ist.

12. Linearantriebssystem nach Anspruch 11, bei welchem zwei Konstantkraftgeber (1) vorgesehen sind, dessen ortsfest angeordnete Teile miteinander verbunden sind und zusammen ein gemeinsames ortsfestes Teil (10) bilden, in welchem die bewegbaren Teile (11) der Konstantkraftgeber (1) geführt sind, und bei welchem ferner die beiden bewegbaren Teile (11) durch ein Verbindungsstück (13), z.B. eine Platte, miteinander verbunden sind, mit welchem Verbindungsstück (13) auch der Läufer (21) der Antriebseinheit (2) verbunden ist.
